(19) Europäisches Patentamt
European Patent Office
Office européen des brevets

(11) **EP 3 059 699 B1**

(12) **EUROPEAN PATENT SPECIFICATION**

(45) Date of publication and mention
of the grant of the patent:
**26.02.2020 Bulletin 2020/09**

(51) Int Cl.:
*G06N 3/04* (2006.01)      *G06N 3/08* (2006.01)
*G10L 25/30* (2013.01)     *G10L 15/16* (2006.01)

(21) Application number: **15191549.3**

(22) Date of filing: **27.10.2015**

(54) **NEURAL NETWORK TRAINING METHOD AND RECOGNITION APPARATUS**

TRAININGSVERFAHREN FÜR NEURONALES NETZWERK UND ERKENNUNGSVORRICHTUNG

PROCÉDÉ DE FORMATION DE RÉSEAU NEURONAL ET APPAREIL DE RECONNAISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2015 KR 20150025077**

(43) Date of publication of application:
**24.08.2016 Bulletin 2016/34**

(73) Proprietor: **Samsung Electronics Co., Ltd.
Gyeonggi-do 16677 (KR)**

(72) Inventors:
• **YOO, Sang Hyun
Gyeonggi-do 17113 (KR)**
• **MOON, Taesup
Gyeonggi-do 17113 (KR)**

(74) Representative: **Grünecker Patent- und
Rechtsanwälte
PartG mbB
Leopoldstraße 4
80802 München (DE)**

(56) References cited:
• **JAN KOUTNÍK ET AL: "A Clockwork RNN",
PROCEEDINGS OF THE 31ST INTERNATIONAL
CONFERENCE ON MACHINE LEARNING, vol. 32,
14 February 2014 (2014-02-14), pages 1863-1871,
XP055289373,**
• **PHAM VU ET AL: "Dropout Improves Recurrent
Neural Networks for Handwriting Recognition",
2014 14TH INTERNATIONAL CONFERENCE ON
FRONTIERS IN HANDWRITING RECOGNITION,
IEEE, 1 September 2014 (2014-09-01), pages
285-290, XP032703488, ISSN: 2167-6445, DOI:
10.1109/ICFHR.2014.55 ISBN: 978-1-4799-4335-7
[retrieved on 2014-12-09]**
• **Wojciech Zaremba ET AL: "Recurrent Neural
Network Regularization", , 8 September 2014
(2014-09-08), XP055321161, Retrieved from the
Internet:
URL:https://arxiv.org/pdf/1409.2329v5.pdf
[retrieved on 2016-11-21]**
• **Geoffrey E Hinton ET AL: "Improving neural
networks by preventing co-adaptation of feature
detectors", arXiv:1207.0580v1 [cs.NE], 3 July
2012 (2012-07-03), XP055112910, Retrieved from
the Internet:
URL:http://arxiv.org/abs/1207.0580v1 [retrieved
on 2014-04-08]**

**Description**

1. Field

The following description relates to a neural network training method and apparatus. The following description also relates to a recognition method and apparatus.

2. Description of Related Art

Recently, active research is being conducted on applying a human pattern recognition method to an actual computer, to solve an issue of classifying an input pattern into a predetermined group. As an example, research on an artificial neural network is being conducted by modeling a feature of a human biological neural cell based on a mathematical expression. To perform the aforementioned modeling, an artificial neural network may use an algorithm imitating a human ability of learning. Based on the learning algorithm, the artificial neural network may generate a mapping between the input pattern and output patterns, and the generating may also be expressed as a learning ability of the artificial neural network. Also, the artificial neural network may have a generalization ability to output a relatively accurate output based on a learning result, in response to a new input pattern that has not been used in a previous learning process.
JAN KOUTNíK ET AL: "A Clockwork RNN", PROCEEDINGS OF THE 31ST INTERNATIONAL CONFERENCE ON MACHINE LEARNING, vol. 32, 14 February 2014 (2014-02-14) relates to a clockwork recurrent neural network in which hidden layer is partitioned into separate modules, each processing inputs at its own temporal granularity, making computations only at its prescribed clock rate. CW-RNN reduces the number of SRN parameters, improves the performance significantly and speeds up the network evaluation. PHAM VU ET AL: "Dropout Improves Recurrent Neural Networks for Handwriting Recognition", 2014 14TH INTERNATIONAL CONFERENCE ON FRONTIERS IN HANDWRITING RECOGNITION, IEEE, 1 September 2014 (2014-09-01) relates to recurrent neural network (RNN) with Long Short-Term memory cells for handwriting recognition. The performance is improved using dropout regularization method for deep architectures. The dropout is only applied to the feed-forward connections and not to the recurrent connections.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In one general aspect, a method of training a neural network using learning data includes selecting a reference hidden node from hidden nodes in the neural network, and training the neural network based on remaining hidden nodes obtained by excluding the reference hidden node from the hidden nodes, wherein the reference hidden node maintains a value in a previous time interval until a subsequent time interval, wherein the learning data comprises sequential data comprising at least one of voice data, image data, biometric data, and handwriting data, wherein a connection between the reference hidden node and itself in a subsequent time interval is maintained, and wherein a connection between the reference hidden node and other hidden nodes except for itself in the subsequent time interval is ignored.
The selecting may include randomly selecting the reference hidden node from the hidden nodes for each time interval.
The reference hidden node may maintain a long-term memory value included in a corresponding reference hidden node in the previous time interval until the subsequent time interval.
The reference hidden node may block a value input from a lower layer of a hidden layer including a corresponding reference hidden node.
The reference hidden node may block a value output to an upper layer of a hidden layer including a corresponding reference hidden node.
The remaining hidden nodes may be connected to hidden nodes of other time intervals including the previous time interval and the subsequent time interval.
The training may include updating a connection weight included in the neural network based on a result of the training.
The neural network may be a recurrent neural network including hidden layers.
In another general aspect, a non-transitory computer-readable storage medium includes a program including instructions to cause a computer to perform the first method presented above.
In another general aspect, a recognition apparatus includes a receiver configured to receive sequential data, and a recognizer configured to recognize the sequential data using a neural network including hidden nodes, wherein at least one of the hidden nodes comprise a value calculated based on a first value of a corresponding hidden node in a first time interval preceding a current time interval, a first probability that the first value of the corresponding hidden node is to be transferred until the current time interval, a second value of a corresponding hidden node in a second time interval preceding a first time interval, and a second probability that the second value of the corresponding hidden node is to be transferred until the current time interval, and wherein the neural network is trained based on remaining hidden nodes obtained by excluding a reference hidden node from the hidden nodes, and wherein the sequential data comprises at least one of voice data, image data, biometric data, and handwriting data.

Other features and aspects will be apparent from the following detailed description, the drawings, and the claims.

BRIEF DESCRIPTION OF THE DRAWINGS

FIG. 1 illustrates an example of a neural network training apparatus.
FIG. 2 illustrates an example of a procedure of training a neural network.
FIG. 3 illustrates another example of a procedure of training a neural network.
FIG. 4 illustrates an example of a procedure of updating a value of a hidden node included in a hidden layer and a learning algorithm based on the procedure.
FIG. 5 illustrates an example of a recognition apparatus.
FIG. 6 illustrates an example of a procedure of determining a value of a hidden node during a recognition performed based on a pre-trained neural network.
FIG. 7 illustrates an example of a neural network training method.
FIG. 8 illustrates an example of a recognition method.

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

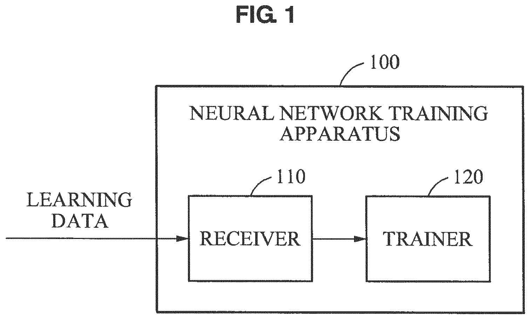

FIG. 1 illustrates a neural network training apparatus 100.

The neural network training apparatus 100 trains a neural network, such as an artificial neural network. The neural network is, for example, a recognition model implemented using hardware and/or software imitating a computation ability of a biological system by using numerous artificial neurons connected through appropriate connection lines.

In the neural network referred to above, the neurons are potentially artificial neurons that have a simplified function modeling that of a biological neuron. In such an example, the artificial neurons are potentially mutually connected through a connection line having a connection weight. Here, the connection weight is a predetermined value of the connection line and is also be referred to as, for example, a connection strength. The neural network uses the artificial neurons to perform a human cognitive function or learning process. The artificial neuron is also referred to as, for example, a node that is a unit element of the neural network.

In an example, the neural network includes a plurality of layers. For example, the neural network includes an input layer, a hidden layer, and an output layer. The input layer receives an input to perform learning and transfers the received input to the hidden layer. The output layer generates an output of the neural network based on a signal received from nodes of the hidden layer. The hidden layer is located between the input layer and the output layer, and changes learning data transferred through the input layer into a value that is easily predicted. For example, nodes included in the input layer and the hidden layer are mutually connected through the connection line having the connection weight, and nodes included in the hidden layer and the output layer are mutually connected through the connection line having the connection weight. In such an example, each of the input layer, the hidden layer, and the output layer includes a plurality of nodes.

In an example, the neural network includes a plurality of hidden layers. Such a neural network including the plurality of hidden layers is also referred to as, for example, a deep neural network. A training of such a deep neural network is also referred to as, for example, a deep learning. The node included in the hidden layer is also referred to as, for example, a hidden node. Additionally, in an example, an output of the hidden node in a previous time interval is connected to hidden nodes of a current time interval. Also, in an example, an output of a hidden node in the current time interval is connected to hidden nodes of a subsequent time interval. Such connection allows the nodes to interact with one another and allows the propagation of relationships between the nodes throughout the network. A neural network having hidden nodes included in different time intervals and recurrently connected to one another is also referred to as, for example, a recurrent neural network.

The neural network training apparatus 100 trains the neural network through a supervised learning process. The supervised learning process is, for example, a method of inputting learning data and output data corresponding to the learning data to the neural network and updating the connection weight of connection lines such that the proper and/or desired output data corresponding to the learning data is output. Here, in an example, the learning data refers to a set of training data that the neural network is able to use as basis for deriving appropriate weights and connections that will cause the neural network to achieve correct pattern recognition. For example, the neural network training apparatus 100 updates the connection weights between the artificial neurons based on a back propagation learning technique and an appropriate delta rule.

The back propagation learning technique is, for example, a method of estimating an error of learning data through a forward computation process and propagating the estimated error in a reverse direction, starting from the output layer of neurons toward the hidden layer of neurons and the input layer of neurons, thereby adjusting the connection weights between the neurons involved to reduce the error. The neural network is processed when classifying data in an order of the input layer, the hidden layer, and the output layer. In the back propagation learning, the connection weight is updated in a reversed direction in an order of the output layer, the hidden layer, and the input layer.

Referring to FIG. 1, the neural network training apparatus 100 includes a receiver 110 and a trainer 120. In an example, the neural network training apparatus 100 is implemented using a hardware module. For example, the neural network learning apparatus 100 is included in various types of a computing device and/or system, for example, a smartphone, a tablet computer, a laptop computer, a desktop computer, a television, a wearable device, a security system, and a smart home system. However, these are only examples of computing devices and are not intended to be taken as limiting.

In the example of FIG. 1, the receiver 110 receives learning data. For example, the learning data includes sequential data including at least one of voice data, image data, biometric data, and handwriting data. That is, the learning data includes a sequence of examples that are used for training the neural network to better identify subsequent examples.

In the example of FIG. 1, the trainer 120 extracts a feature value from the learning data. For example, the trainer 120 extracts a relative variation varying over time from the voice data, and trains the neural network based on the extracted feature value. Thus, the voice data is divided based on a predetermined time unit, and a result of the dividing is input to the neural network as the learning data. By processing the voice data in this manner, it is possible to use the learning data as a basis for processing future data.

In such an example, the trainer 120 trains the neural network based on remaining hidden nodes obtained by excluding at least one reference hidden node from the plurality of hidden nodes included in the neural network. Thus, the remaining hidden nodes, the nodes of the input layer, and the nodes of the output layer are all included in one learning pattern. The neural network is, for example, a recurrent neural network having hidden nodes included in different time intervals and connected to one another, and also includes a plurality of hidden layers. In such an example, in consecutive time intervals, an output value of a hidden layer is input to a hidden layer in a subsequent time interval.

In the example of FIG. 1, the trainer 120 randomly selects the at least one reference hidden node from the plurality of hidden nodes. When the same learning data is input, the trainer 120 randomly selects the at least one reference hidden node for each time interval. Thus, by using such an approach, the trainer 120 trains the neural network based on a different learning pattern for each time interval.

A reference hidden node refers to, for example, a hidden node excluded from a process of training the neural network. A connection between the reference hidden node and nodes of an upper layer is ignored, such as by not considering such a connection during the training process. For example, the reference hidden node blocks a value output to the upper layer, when training. In this example, the upper layer is intended to indicate another hidden layer or output layer disposed higher in the node hierarchy, in the direction of the eventual output of the network than a hidden layer including a corresponding reference hidden node. Thus, when considering, in training, the connection between the reference hidden node and the nodes of the upper layer, an output of the reference hidden node is not input to the nodes of the upper layer, or the reference hidden node outputs a value "0", or another appropriate null value, to the nodes of the upper layer.

Hence, during the learning process, a connection between the reference hidden node of a current time interval and hidden nodes of time intervals other than the current time interval is ignored, as discussed above. In this example, however, a connection between the reference hidden node and a hidden node corresponding to the reference hidden node in a time interval differing from the current time interval is still potentially maintained. Hereinafter, a term "self-corresponding hidden node" is also intended to be used to indicate the hidden node corresponding to the reference hidden node in a time interval differing from the current time interval. Thus, the reference hidden node transfers a value of a self-corresponding hidden node in the previous time interval, to a corresponding self-corresponding hidden node in the subsequent time interval. For example, a connection weight between the reference hidden node and a self-corresponding hidden node in another time interval may be "1". Since the reference hidden node is randomly selected and is also excluded from each time interval, in various examples the self-corresponding hidden node in the other time interval is appropriately selected as a reference hidden node or is not selected as the reference hidden node of the corresponding time interval.

In such an example, the remaining hidden nodes obtained by excluding the at least one reference hidden node from the plurality of hidden nodes are connected to hidden nodes of the other time intervals.

When a training performed based on one set of learning data is terminated, the trainer 120 optionally trains the neural network based on another set of learning data, if desired.

Thus, the trainer 120 updates the connection weights applied to the neural network in consideration of a result of the training performed based on the learning data. The trainer 120 calculates an error by comparing an output value output from an output layer of the neural network and an expectation value desired to be acquired based on the learning data. Accordingly, the trainer 120 adjusts the connection weight applied to the neural network to reduce the calculated error. The trainer 120 controls the neural network to repetitively learn all sequential data included in the sets of learning data based on a preset number of learning times designated for the training process.

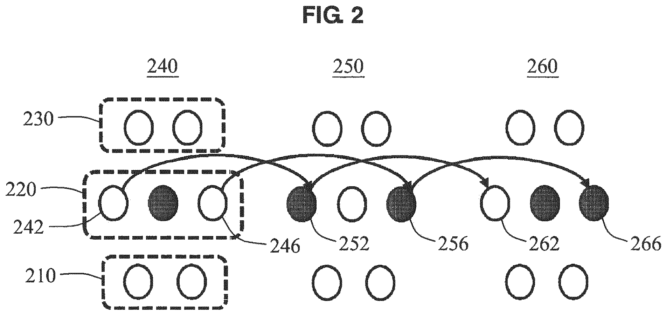

FIG. 2 illustrates an example of a procedure of training a neural network.

FIG. 2 illustrates learning patterns 240, 250, and 260 corresponding to a predetermined neural network for each timestamp. In FIG. 2, certain connection lines are presented to designate a neural network training method. For increased ease of description and conciseness, the following descriptions are provided based on reference hidden nodes 252 and 256 included in the learning pattern 250 of a current time interval T. In the example of FIG. 2, a reference hidden node excluded from a learning pattern is indicated by a filled circle.

In the example of FIG. 2, the learning pattern 240 is a learning pattern of a previous time interval T - 1, the learning pattern 250 is a learning pattern of the current time interval T, and the learning pattern 260 is a learning pattern of a subsequent time interval T + 1. The respective learning patterns 240, 250, and 260 that correspond to the previous time interval T - 1, the current time interval T, and the subsequent time interval T + 1 are used for a learning process.

In the example of FIG. 2, the neural network includes an input layer 210, a hidden layer 220, and an output layer 230. In this example, the input layer 210 is a bottom layer to which sequential data is input as learning data. The hidden layer 220 is a middle layer disposed between the input layer 210 and the output layer 230. The output layer 230 is a top layer from which an output value of the sequential data that is input to the input layer 210 emerges. For example, each of the input layer 210, the hidden layer 220, and the output layer 230 includes a plurality of nodes. A node included in the hidden layer 220 is also be referred to as, for example, a hidden node.

The neural network is connected in a direction through the input layer 210, the hidden layer 220, and the output layer 230, in terms of the information flow through the neural network. When the learning data is input to nodes of the input layer 210, the learning data is transferred to the hidden node through a conversion performed in the nodes of the input layer 210 such that the output value is generated in the output layer 230. For increased clarity and conciseness, FIG. 2 illustrates one hidden layer, for example, the hidden layer 220. However, the examples are not limited thereto as the neural network potentially includes a plurality of hidden layers instead of only a single hidden layer.

A neural network training apparatus inputs the sequential data to the input layer 210 of the neural network, and trains the neural network such that an appropriate classification result of the sequential data is output from the output layer 230 of the neural network. The neural network trained by the neural network training apparatus is, for example, a recurrent neural network in which hidden nodes of different time intervals are routinely connected to one another, in order to provide most robust classification performance. When the neural network training apparatus trains the neural network, the hidden nodes included in the hidden layer are connected to hidden nodes of a subsequent time interval. For example, an output value of a hidden node of the current time interval T is input to the hidden nodes of the subsequent time interval T + 1.

For example, in a process of learning the sequential data, the neural network is trained by the neural network training apparatus based on a learning pattern in which the plurality of hidden nodes is partially ignored. In such an example, the neural network learning apparatus randomly selects a reference hidden node to be excluded or ignored from the hidden nodes.

As an example, the neural network learning apparatus selects the reference hidden node from the hidden nodes at each instance when one item of sequential data is input. Once chosen, the selected reference hidden node is excluded from a full procedure that is performed based on the one item of sequential data. Since the selected reference hidden node is excluded from all time intervals in a learning process, an additional item of sequential data besides the selected data is necessary such that remaining data is present so that the selected reference hidden node is trained. Hence, an amount of time sufficient to train all of the hidden nodes potentially increases due to the requirement for additional training data.

As another example, the neural network training apparatus randomly selects the reference hidden node from the plurality of hidden nodes for each time interval. Since the reference hidden node is randomly selected to be excluded from the learning process for each time interval, a hidden node that was selected as a reference hidden node and excluded from the learning process in a previous time interval is potentially not selected as a reference hidden node in a current time interval, and thereby participates in the learning process in a current time interval. By using one item of sequential data at a time, numerous hidden nodes are trained in this manner. When the hidden node selected as the reference hidden node and excluded from the learning process in the previous time interval is not excluded and is trained in the current time interval, a corresponding hidden node then has a meaningful value in the current time interval. Thus, the corresponding hidden node is able to maintain a value determined before the corresponding hidden node is selected as the reference hidden node in time intervals until the current time interval, and thereby participates in the learning process. For example, in order to randomly select the reference hidden node for each time interval, the value of the corresponding hidden node potentially needs to be maintained during a plurality of time intervals to coordinate which time intervals a give node is selected as being hidden in. Hereinafter, related descriptions are provided with reference to the learning patterns 240 through 260 of FIG. 2.

Referring to the example of FIG. 2, a different reference hidden node is randomly selected and excluded from each of the learning patterns 240 through 260.

In the example of FIG. 2, in the learning pattern 250 of the current time interval T, nodes disposed at both ends of the hidden layer are selected as reference hidden nodes 252 and 256 to be dropped out of consideration. The reference hidden node 252 maintains a value in the previous time interval T - 1 until the subsequent time interval T + 1. For example, a hidden node 242 of the learning pattern 240, the reference hidden node 252 of the learning pattern 250, and the hidden node 262 of the learning pattern 260 have the same value. In this example, the value of the hidden node or the reference hidden node indicates a long-term memory value of a corresponding node. The long-term memory value indicates a value maintained by the corresponding node during the plurality of time intervals. Such a long-term memory value is a value that is used as a substitute in lieu of a value transferred from a lower layer or a value transferred to an upper layer.

Similarly, the reference hidden node 256 maintains the value in the previous time interval T - 1 until the subsequent time interval T + 1. For example, a hidden node 246 of the learning pattern 240, the reference hidden node 256 of the learning pattern 250, and the reference hidden node 266 of the learning pattern 260 potentially all have the same value. Since the reference hidden node 266 is included in the learning pattern 260, the reference hidden node 256 maintains the same value until a further subsequent time interval T + 2.

The hidden node 254 of the learning pattern 250 in the current time interval T indicates a remaining hidden node obtained by excluding the reference hidden nodes 252 and 256 from the plurality of hidden nodes. The hidden node 254 is potentially connected to hidden nodes of other time intervals. For example, the hidden node 254 is connected to the hidden nodes of the learning pattern 240 in the previous time interval T - 1. The hidden node 254 is also connected to the hidden nodes of the learning pattern 260 in the subsequent time interval T + 1. Although the hidden node 254 is connected to the reference hidden node 266 of the learning pattern 260, the reference hidden node 266 ignores a value received from the hidden node 254 and maintains the value of the reference hidden node 256 of the learning pattern 250.

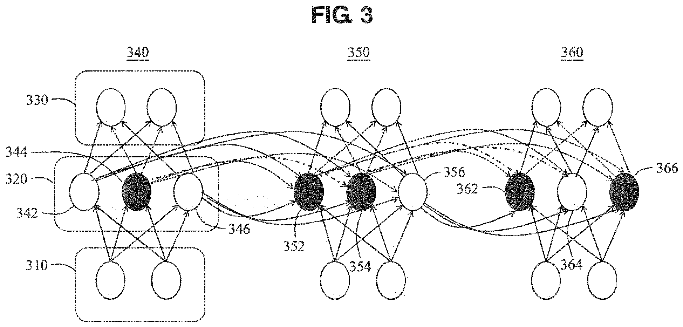

FIG. 3 illustrates another example of a procedure of training a neural network.

Referring to the example of FIG. 3, in a neural network, a plurality of nodes included in an input layer 310, a hidden layer 320, and an output layer 330 are connected to one another. In FIG. 3, a solid line represents connections that are connections in which that nodes are normally connected to one another, a dotted line represents connections such that a connection between nodes are ignored, and a dash-dot line represents a connection such that a value of a corresponding hidden node is also maintained in a subsequent time interval.

In the example of FIG. 3, a learning pattern 340 indicates a learning pattern in a previous time interval T - 1, a learning pattern 350 indicates a learning pattern in a current time interval T, and a learning pattern 360 indicates a learning pattern in a subsequent time interval T + 1.

In the previous time interval T - 1, a hidden node 344 is selected as a reference hidden node from hidden nodes 342, 344, and 346. In this example, the hidden node 344 is also referred to as, for example, a reference hidden node 344. In such an example, a connection between the reference hidden node 344 and nodes of the output layer 330 corresponding to an upper layer is ignored. For example, the reference hidden node 344 blocks a value output to the output layer 330 corresponding to the upper layer.

With respect to connections to nodes of other time intervals, a connection of the reference hidden node 344 to a hidden node 354 corresponding to the reference hidden node 344 in a current time interval T is maintained while a connection between the reference hidden node 344 and nodes included in a hidden layer of the current time interval T is essentially ignored. Thus, a value of the reference hidden node 344 in the previous time interval T - 1 is maintained accordingly until the current time interval T. In such an example, the maintained value is, for example, a corresponding long-term memory value.

However, in an example, a connection between the reference hidden node 344 and nodes of the input layer 310 corresponding to a lower layer is not ignored. Since the reference hidden node 344 ignores a value input from the input layer 310 in lieu of using the input value, the reference hidden node 344 blocks the value input from the input layer 310.

In the previous time interval T - 1, remaining hidden nodes, for example, the hidden nodes 342 and 346, obtained by excluding the reference hidden node 344 from the hidden nodes 342, 344, and 346 are connected to hidden nodes 352, 354, and 356 of the current time interval T as well as the nodes of the output layer 330 corresponding to the upper layer.

In the current time interval T, the hidden nodes 352 and 354 are selected as reference hidden nodes from the hidden nodes 352, 354, and 356. In this example, the hidden nodes 352 and 354 are also be referred to as, for example, reference hidden nodes 352 and 354. Accordingly, connections of the reference hidden nodes 352 and 354 to the nodes of the output layer corresponding to the upper layer are ignored. In such an example, the reference hidden nodes 352 and 354 block a value output to the output layer corresponding to the upper layer.

With respect to connections to nodes of other time intervals, a connection of the reference hidden node 352 to a hidden node 362 corresponding to the reference hidden node 352 in a subsequent time interval T+1 is maintained while a connection between the reference hidden node 352 and hidden nodes of the hidden layer in the subsequent time interval T + 1 is essentially ignored, as discussed. In this example, the reference hidden node 352 is connected to hidden nodes in the previous time interval T - 1. The reference hidden node 352 maintains a value of the hidden node 342 corresponding to the node itself in the previous time interval T - 1 while simultaneously ignoring values of other hidden nodes, such as, for example, the hidden nodes 344 and 346. Thus, the reference hidden node 352 in the current time interval T maintains the value in the previous time interval T - 1 until the subsequent time interval T + 1.

Similarly, the reference hidden node 354 also maintains the value of the hidden node 344 in the previous time interval T - 1 until the subsequent time interval T+ 1.

However, connections of the reference hidden nodes 352 and 354 to nodes of an input layer corresponding to a lower layer are not ignored. Since the reference hidden nodes 352 and 354 ignores a value input from the input layer in lieu of using the input value, the reference hidden nodes 352 and 354 block the value input from the input layer.

In the current time interval T, a remaining hidden node, for example, the hidden node 356, obtained by excluding the reference hidden nodes 352 and 354 from the hidden nodes 352, 354, and 356 is connected to hidden nodes 362, 364, and 366 of a subsequent time interval T+1 as well as the nodes of the upper layer.

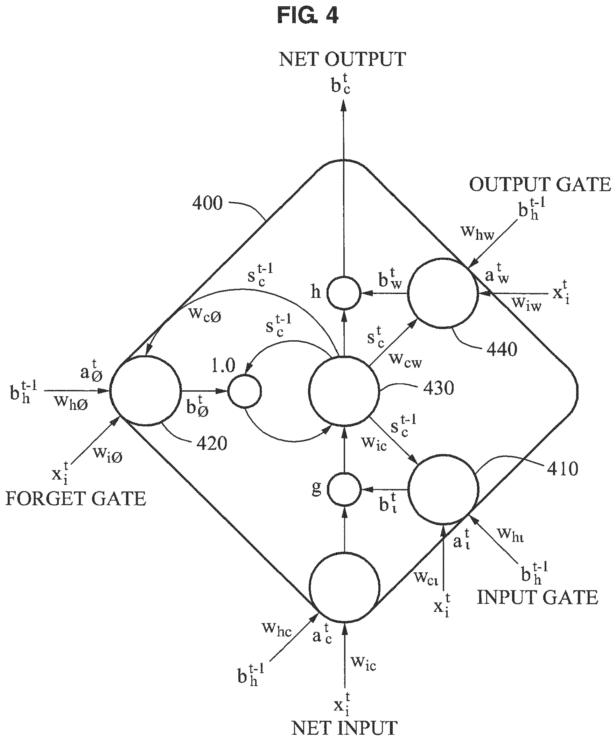

FIG. 4 illustrates an example of a procedure of updating a value of a hidden node 400 included in a hidden layer and a learning algorithm based on such a procedure.

In the present examples, a neural network trained by a neural network training apparatus is, for example, a recurrent neural network based on a long short-term memory (LSTM). By using three gates, an LSTM-based recurrent neural network increases a recognition rate of sequential data having a relatively long sequence, by comparison to other types of neural network.

FIG. 4 illustrates the hidden node 400 included in the hidden layer of the neural network. In the example of FIG. 4, the hidden node 400 includes an input gate 410, a forget gate 420, a cell 430, and an output gate 440.

In the example of FIG. 4, the input gate 410 controls a value transferred from a lower layer of a hidden layer including the hidden node 400. When an output value of the input gate 410 is "0", the hidden node 400 ignores the value transferred from the lower layer. An output value $b_\iota^t$ of the input gate 410 may be calculated as shown below in Equation 1.

Equation 1

$$a_\iota^t = \sum_{i=1}^{I} w_{i\iota} x_i^t + \sum_{h=1}^{H} w_{h\iota} b_h^{t-1} + \sum_{c=1}^{C} w_{c\iota} s_c^{t-1}$$

$$b_\iota^t = f(a_\iota^t)$$

In Equation 1, above, $a_\iota^t$ denotes a value input to the input gate 410, $x_i^t$ denotes a value transferred from a lower layer of a current time interval, and

$$w_{i\iota}$$

denotes a weight applied to $x_i^t$. Additionally, $b_h^{t-1}$ denotes an output value of a self-corresponding hidden node in a previous time interval, and

$$w_{h\iota}$$

denotes a weight applied to $b_h^{t-1}$. Further, $s_c^{t-1}$ denotes an output value of the cell 430 in the previous time interval, and

$$w_{c\iota}$$

denotes a weight applied to $s_c^{t-1}$. Also, *f*() denotes an activation function of a gate. Finally, *I* denotes a number of nodes included in the lower layer, *H* denotes a number of nodes included in the hidden layer including the hidden node 400, and C denotes a number of cells including the cell 430 included in the hidden node 400.

In the example of FIG. 4, the forget gate 420 controls a value transferred from hidden nodes in the previous time interval. When an output value of the forget gate 420 is "0", the hidden node 400 ignores the value transferred from the hidden nodes in the previous time interval. For example, an output value $b_\phi^t$ of the forget gate 420 is calculated as shown in Equation 2, below.

Equation 2

$$a_\phi^t = \sum_{i=1}^{I} w_{i\phi} x_i^t + \sum_{h=1}^{H} w_{h\phi} b_h^{t-1} + \sum_{c=1}^{C} w_{c\phi} s_c^{t-1}$$

$$b_\phi^t = \begin{cases} 1, & \textit{if the unit drops} \\ f(a_\phi^t), & \textit{otherwise} \end{cases}$$

In Equation 2, $a_\phi^t$ denotes a value input to the forget gate 420, and $\omega_{i\phi}$, $\omega_h$, and $\omega_{c\phi}$ denote weights applied to $x_i^t$, $b_h^{t-1}$, and $s_c^{t-1}$, respectively.

For example, when the hidden node 400 is selected as a reference hidden node to be dropped out, the forget gate 420 outputs "1", as specified above.

The cell 430 includes a memory value of the hidden node 400. An output value $s_c^t$ of the cell 430 is calculated as shown in Equation 3, below.

Equation 3

$$a_c^t = \begin{cases} 0, & \textit{if the unit drops} \\ \sum_{i=1}^{I} w_{ic}x_i^t + \sum_{h=1}^{H} w_{hc}b_h^{t-1}, & \textit{otherwise} \end{cases}$$

$$s_c^t = b_\phi^t s_c^{t-1} + b_\iota^t g(a_c^t)$$

In Equation 3, $a_c^t$ denotes a value input to the cell 430, and $\omega_{ic}$, and $\omega_{hc}$ denote weight applied to $x_i^t$ and $b_h^{t-1}$, respectively. Also, $g()$ denotes a cell input activation function.

When the hidden node 400 is selected as the reference hidden node to be dropped out, the value input to the cell 430, $a_c^t$ is "0" and the output value $b_\iota^t$ of the forget gate 420 is "1". In the example of FIG. 4, the output value $s_c^t$ of the cell 430 is the same as $s_c^{t-1}$, which is an output value of a cell in the previous time interval. Thus, when the hidden node 400 is selected as the reference hidden node, the hidden node 400 maintains the value from the previous time interval until a subsequent time interval.

In the example of FIG. 4, the output gate 440 controls a value transferred to an upper layer of the hidden layer including the hidden node 400. When an output value of the output gate 440 is "0", the hidden node 400 does not transfer the output value of the hidden node 400 to the upper layer. For example, an output value $b_\omega^t$ of the output gate 440 is calculated as shown in Equation 4, below.

Equation 4

$$a_\omega^t = \sum_{i=1}^{I} w_{i\omega}x_i^t + \sum_{h=1}^{H} w_{h\omega}b_h^{t-1} + \sum_{c=1}^{C} w_{c\omega}s_c^t$$

$$b_\omega^t = f(a_\omega^t)$$

In Equation 4, $a_\omega^t$ denotes a value input to the output gate 440, and $\omega_{i\omega}$, $\omega_{h\omega}$ and $\omega_{c\omega}$ denote weights applied to $x_i^t$, $b_h^{t-1}$, and $s_c^t$, respectively.

Further, a final output value $b_c^t$ of the hidden node 400 is calculated as shown in Equation 5, below.

Equation 5

$$b_c^t = b_\omega^t h(s_c^t)$$

In Equation 5, $h()$ denotes a cell output activation function.

The foregoing discussion is provided to describe a state of a hidden node based on an example in which sequential data input to an input layer of a neural network outputs an output value through an output layer and thus, corresponds to a forward pass of data through the neural network. Through the forward pass of the data through the neural network, the neural network training apparatus updates a value of each hidden node. Additionally, the neural network training apparatus estimates an error based on the output value output from the output layer.

The neural network training apparatus propagates the estimated error in a backward direction from the output layer through a hidden layer to the output layer, and updates a connection weight to reduce the error. Such propagating is also referred to as, for example, a backward pass. In such an example, the propagating is performed in a temporally backward direction as well as in the backward direction from the output layer through the hidden layer to the output layer. When a forward pass is performed, a value of t increases, such that a temporally forward direction is used. Conversely, when the backward pass is performed, a value of t decreases, such that a temporally backward direction is used.

For example, the neural network training apparatus defines an objective function to measure an optimization rate of connection weights set currently. Based on a result of the objective function, the neural network training apparatus continuously changes the connection weights and repetitively performs training. The objective function is, for example, an error function for calculating an error between an output value actually output from the neural network based on the learning data and an expectation value that is desired to be output. Thus, the neural network training apparatus may update the connection weights to reduce a value of the error function.

In the backward pass, a value input to the hidden node 400, $\epsilon_c^t$, and a value input to the cell 430, $\epsilon_s^t$ are defined as shown in Equation 6, below.

$$\text{Equation 6}$$

$$\epsilon_c^t \overset{\text{def}}{=} \frac{\partial O}{\partial b_c^t} \qquad \epsilon_s^t \overset{\text{def}}{=} \frac{\partial O}{\partial s_c^t}$$

In Equation 6, O denotes the objective function. Also, in an example, O represents a cross-entropy error signal in the neural network.

The value input from the upper layer to the hidden node 400, $\epsilon_c^t$ is calculated as shown in Equation 7, below.

$$\text{Equation 7}$$

$$\epsilon_c^t = \begin{cases} 0, & \text{if the unit drops} \\ \sum_{k=1}^{K} w_{ck}\delta_k^t + \sum_{h=1}^{H} w_{ch}\delta_h^{t+1}, & \text{otherwise} \end{cases}$$

In Equation 7, $\delta_k^t$ denotes a value transferred from the upper layer in the current time interval, $\delta_h^{t+1}$ denotes a value output from a self-corresponding hidden node in the subsequent time interval, and $\omega_{ck}$ and $\omega_{ch}$ denote weights applied to $\delta_k^t$ and $\delta_h^{t+1}$ respectively. Also, K denotes a number of nodes included in the upper layer.

When the hidden node 400 is selected as the reference hidden node to be dropped out, the hidden node 400 ignores the value input to the hidden node 400.

A value output from the output gate 440, $\delta_\omega^t$ is calculated as shown in Equation 8, below.

Equation 8

$$\delta_{\omega}^{t} = f'(a_{\omega}^{t}) \sum_{c=1}^{C} h(s_{c}^{t})\epsilon_{c}^{t}$$

Additionally, $\epsilon_{s,}^{t}$ the value input to the cell 430 and $\delta_{c,}^{t}$ the value output from the cell 430 are calculated as shown in Equation 9, below.

Equation 9

$$\epsilon_{s}^{t} = b_{\omega}^{t} h'(s_{c}^{t})\epsilon_{c}^{t} + b_{\phi}^{t+1}\epsilon_{s}^{t+1} + w_{c\iota}\delta_{\iota}^{t+1} + w_{c\phi}\delta_{\phi}^{t+1} + w_{c\omega}\delta_{\omega}^{t}$$

$$\delta_{c}^{t} = \begin{cases} 0, & \text{if the unit drops} \\ b_{\iota}^{t} g'(a_{c}^{t})\epsilon_{s}^{t}, & \text{otherwise} \end{cases}$$

In Equation 9, $\epsilon_{s}^{t+1}$ denotes a value input to a cell of a self-corresponding hidden node in the subsequent time interval, $\delta_{\iota}^{t+1}$ denotes a value output from the input gate 410 of the self-corresponding hidden node in the subsequent time interval, and $\delta_{\phi}^{t+1}$ denotes a value output from the forget gate 420 of the self-corresponding hidden node in the subsequent time interval.
When the hidden node 400 is selected as the reference hidden node to be dropped out, the cell 430 outputs "0".

A value output from the forget gate 420, $\delta_{\phi}^{t}$ is calculated as shown in Equation 10, below.

Equation 10

$$\delta_{\phi}^{t} = \begin{cases} 0, & \text{if the unit drops} \\ f'(a_{\phi}^{t}) \sum_{c=1}^{C} s_{c}^{t-1}\epsilon_{s}^{t}, & \text{otherwise} \end{cases}$$

When the hidden node 400 is selected as the reference hidden node to be dropped out, the forget gate 420 outputs "0".

A value output from the hidden node 400, $\delta_{\iota}^{t}$ is calculated as shown in Equation 11, below.

Equation 11

$$\delta_\iota^t = f'(a_\iota^t) \sum_{c=1}^{C} g(a_c^t)\epsilon_s^t$$

As described above, the neural network training apparatus updates the connection weights of the nodes included in the neural network through a back propagation learning approach.

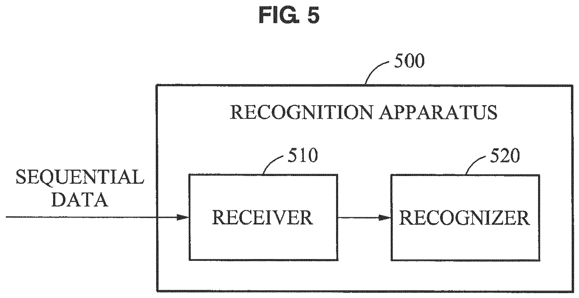

FIG. 5 illustrates a recognition apparatus 500.

Referring to the example of FIG. 5, the recognition apparatus 500 includes a receiver 510 and a recognizer 520. The recognition apparatus 500 has a wide variety of potential applications. For example, the recognition apparatus 500 may be used in a field of, for example, voice recognition, image recognition, body state recognition, and handwriting recognition. However, these are merely examples of recognition fields, and should not be taken as being limiting. The recognition apparatus 500 is potentially implemented through using a hardware module. For example, the recognition apparatus 500 is included in various computing apparatus and/or systems, such as, for example, a smartphone, a tablet computer, a laptop computer, a desktop computer, a television, a wearable device, a security system, and a smart home system.

The receiver 510 receives sequential data. The sequential data is, for example, voice data, image data, biometric data, and handwriting data having a temporality and a sequence.

The recognizer 520 recognizes sequential data input based on a pre-trained neural network. As examples of what is potentially recognized, the recognizer 520 recognizes a sentence or a word from input voice data, and recognizes an object from an image. Also, the recognizer 520 potentially recognizes a user body state by analyzing a biometric signal such as an electrocardiogram (ECG) and an electroencephalogram (EEG), or recognizes an input handwriting by analyzing a user motion. As another example, the recognizer 520 is applied to a deoxyribonucleic acid (DNA) sequencing device to estimate an appropriate DNA sequence from a monitored signal.

In an example, the recognizer 520 extracts a feature value from the sequential data and inputs the extracted feature value into a classifier, thereby outputting an analysis result or a recognition result of the sequential data derived by the classifier.

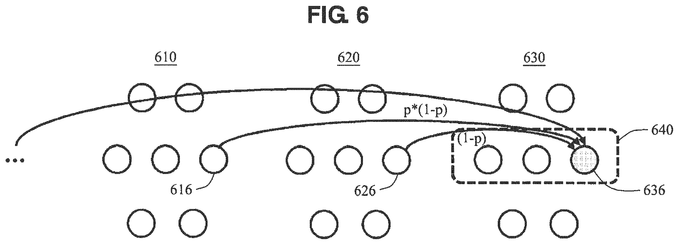

The pre-trained neural network used by the recognizer 520 includes a plurality of hidden nodes. The plurality of hidden nodes include a value of a corresponding hidden node in a time interval preceding the current time interval, and also a value calculated based on a probability that the value of the corresponding hidden node is to be transferred into the current time interval. Descriptions related to a procedure of calculating a value of the plurality of hidden nodes are to be provided with reference to FIG. 6.

In this example, the pre-trained neural network is trained based on remaining hidden nodes obtained by excluding at least one reference hidden node from the plurality of hidden nodes, as discussed further above. When the neural network is trained, the reference hidden node is randomly selected and excluded from the plurality of hidden nodes for each time interval. The reference hidden node maintains a value in the previous time interval until the subsequent time interval. As discussed, the remaining hidden nodes are connected to hidden nodes of other time intervals.

FIG. 6 illustrates an example of a procedure of determining a value of a hidden node during a recognition performed based on a pre-trained neural network.

FIG. 6 illustrates recognition patterns 610, 620, and 630 of a pre-trained neural network for each timestamp. In FIG. 6, a number of connection lines are represented in FIG. 6 in order to describe a recognition method based on the pre-trained neural network. For increased ease of description and conciseness, the following descriptions are provided based on a hidden node 636 included in the learning pattern 630 of a current time interval T. During a process of training, for a neural network used by a recognition apparatus, hidden nodes included in the neural network are dropped out based on a probability having a value of p.

In the example of FIG. 6, the recognition pattern 630 is a learning pattern of the current time interval T, the recognition pattern 620 is a learning pattern of a first previous time interval T - 1, and the recognition pattern 610 is a learning pattern of a second previous time interval T-2.

The recognition apparatus determines a value of the hidden node 636 in the current time interval T based on a value of a corresponding hidden node in a time interval preceding the current time interval T and a probability that the value of the corresponding hidden node is to be transferred to the current time interval T.

As an example, a hidden node 626 is not dropped out such that a value of the hidden node 626 in the first previous time interval T - 1, for example, A, is transferred to the hidden node 636. Thus, a probability that the value of hidden node 626 is to be transferred to the hidden node 636 is "1 - p."

The hidden node 626 is dropped out in lieu of a hidden node 616 such that a value of the hidden node 616 in the second previous time interval T - 2, for example, B, is transferred to the hidden node 636. Thus, a probability that the value of the hidden node 616 is to be transferred to the hidden node 636 is "p(1 - p)."

To transfer C, a value of a hidden node in a third previous time interval to the hidden node 636, the hidden nodes 616 and 626 are dropped out while the hidden node in the third previous time interval is not dropped out. Thus, a probability that C is to be transferred to the hidden node 636 is "$p^2(1 - p)$."

Based on the aforementioned method, the hidden node 636 in the current time interval T has a value of "A*(1-p) + B*p(1-p) + C*$p^2$(1-p) + ...". In this example, a value corresponding to a calculation result of the hidden node 636 indicates a long-term memory value. Thus, the long-term memory value is a value maintained by a hidden node during a plurality of time intervals in lieu of a value transferred from a lower layer and a value transferred to an upper layer.

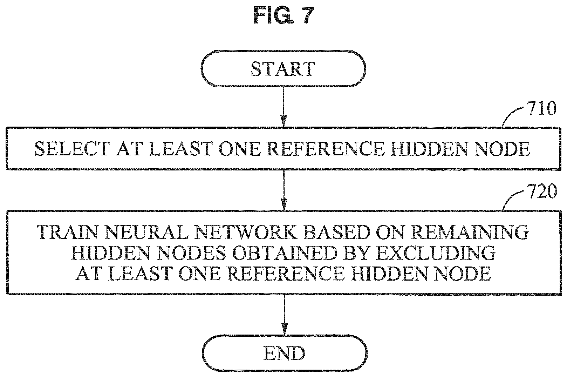

FIG. 7 illustrates an example of a neural network training method.

Further, FIG. 7 is a flowchart illustrating an operation method of a neural network training apparatus. Referring to the example of FIG. 7, the neural network training method includes operation 710 in which at least one reference hidden node is selected from a plurality of hidden nodes included in a neural network, and operation 720 in which the neural network is trained based on remaining hidden nodes obtained by excluding the at least one reference hidden node from the plurality of hidden nodes.

Since the descriptions provided with reference to FIGS. 1 through 4 are also applicable here, repeated descriptions with respect to FIG. 7 will be omitted for increased clarity and conciseness.

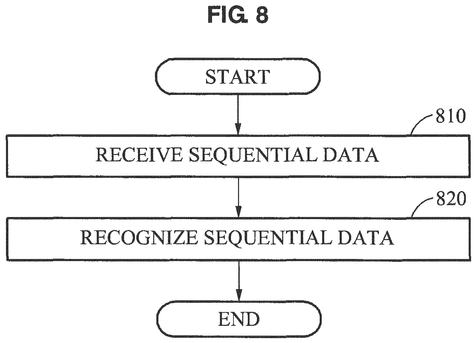

FIG. 8 illustrates an example of a recognition method.

Further, FIG. 8 is a flowchart illustrating an operation method of a recognition apparatus. Referring to the example of FIG. 8, the recognition method includes operation 810 in which sequential data is received, and operation 820 in which the sequential data is recognized based on a neural network including a plurality of hidden nodes. In this example, the plurality of hidden nodes includes a value of a corresponding hidden node in a time interval preceding a current time interval, and a value calculated based on a probability that the value of the corresponding hidden node is to be transferred to the current time interval. The neural network is thus trained based on remaining hidden nodes obtained by excluding at least one reference hidden node from the plurality of hidden nodes.

Since the descriptions provided with reference to FIGS. 1 through 6 are also applicable here, repeated descriptions with respect to FIG. 8 will be omitted for increased clarity and conciseness.

In an aspect of the present examples, it is possible to acquire an ensemble effect in a recurrent neural network and effectively reduce a training time by training a neural network based on learning patterns from which a portion of hidden nodes is dropped out.

In another aspect of the present examples, it is possible to apply a dropout method to an LSTM-based recurrent neural network since a reference hidden node excluded from a learning process maintains a value in a previous time interval to a subsequent time interval.

In still another aspect of the present examples, it is possible to prevent a neural network from excessively adapting, for example, overfitting, to an actual target to be recognized, which potentially leads to a decrease in a recognition rate to the actual target, by training the neural network based on a portion of hidden nodes in lieu of all of the hidden nodes.

In yet another aspect of the present examples, it is possible to train a neural network based on a portion of hidden nodes, thereby solving an issue of co-adaptation in which connection weights of the hidden nodes are caused to be similar to each other as a result of the training.

The apparatuses, units, modules, devices, and other components illustrated in FIGS. 1-8 that perform the operations described herein with respect to FIGS. 1-8 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 1-8. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described herein with respect to FIGS. 1-8 are performed by a processor or a computer as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

As a non-exhaustive example only, a terminal/device/unit as described herein may be a mobile device, such as a cellular phone, a smart phone, a wearable smart device (such as a ring, a watch, a pair of glasses, a bracelet, an ankle bracelet, a belt, a necklace, an earring, a headband, a helmet, or a device embedded in clothing), a portable personal computer (PC) (such as a laptop, a notebook, a subnotebook, a netbook, or an ultra-mobile PC (UMPC), a tablet PC (tablet), a phablet, a personal digital assistant (PDA), a digital camera, a portable game console, an MP3 player, a portable/personal multimedia player (PMP), a handheld e-book, a global positioning system (GPS) navigation device, or a sensor, or a stationary device, such as a desktop PC, a high-definition television (HDTV), a DVD player, a Blu-ray player, a set-top box, or a home appliance, or any other mobile or stationary device capable of wireless or network communication. In one example, a wearable device is a device that is designed to be mountable directly on the body of the user, such as a pair of glasses or a bracelet. In another example, a wearable device is any device that is mounted on the body of the user using an attaching device, such as a smart phone or a tablet attached to the arm of a user using an armband, or hung around the neck of the user using a lanyard.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims.

**Claims**

1. A method of training a neural network using learning data, the method comprising:

   selecting a reference hidden node from hidden nodes in the neural network; and
   training the neural network based on remaining hidden nodes obtained by excluding the reference hidden node from the hidden nodes,
wherein the reference hidden node maintains a value in a previous time interval until a subsequent time interval;
wherein the learning data comprises sequential data comprising at least one of voice data, image data, biometric data, and handwriting data;
wherein a connection between the reference hidden node and itself in a subsequent time interval is maintained, wherein a connection between the reference hidden node and other hidden nodes except for itself in the subsequent time interval is ignored.

2. The method of claim 1, wherein the selecting comprises randomly selecting the reference hidden node from the hidden nodes for each time interval.

3. The method of claim 1 or 2, wherein the reference hidden node maintains a long-term memory value included in a corresponding reference hidden node in the previous time interval until the subsequent time interval.

4. The method of one of claims 1 to 3, wherein the reference hidden node blocks a value input from a lower layer of a hidden layer comprising a corresponding reference hidden node.

5. The method of one of claims 1 to 4, wherein the reference hidden node blocks a value output to an upper layer of a hidden layer comprising a corresponding reference hidden node.

6. The method of one of claims 1 to 5, wherein the remaining hidden nodes are connected to hidden nodes of other time intervals comprising the previous time interval and the subsequent time interval.

7. The method of one of claims 1 to 6, wherein the training comprises updating a connection weight included in the neural network based on a result of the training.

8. The method of one of claims 1 to 7, wherein the neural network is a recurrent neural network comprising hidden layers.

9. A recognition apparatus (500) comprising:

   a receiver (510) configured to receive sequential data; and
   a recognizer (520) configured to recognize the sequential data using a neural network comprising hidden nodes, wherein at least one of the hidden nodes comprise a value calculated based on a first value of a corresponding hidden node in a first time interval preceding a current time interval, a first probability that the first value of the corresponding hidden node is to be transferred until the current time interval, a second value of a corresponding hidden node in a second time interval preceding the first time interval, and a second probability that the second value of the corresponding hidden node is to be transferred until the current time interval,
   wherein the neural network is trained based on remaining hidden nodes obtained by excluding a reference hidden node from the hidden nodes;
   wherein the sequential data comprises at least one of voice data, image data, biometric data, and handwriting data.

10. A non-transitory computer-readable storage medium comprising a program comprising instructions to cause a computer to perform the method of training a neural network using learning data, the method comprising:

   training the neural network in a first time interval based on remaining hidden nodes obtained by excluding a reference hidden node from the hidden nodes, wherein the reference hidden node is selected from hidden nodes in the neural network; and
   training the neural network in a subsequent time interval, wherein the reference hidden node maintains a value in a previous time interval until a subsequent time interval;
   wherein the learning data comprises sequential data comprising at least one of voice data, image data, biometric data, and handwriting data;
   wherein a connection between the reference hidden node and itself in a subsequent time interval is maintained, wherein a connection between the reference hidden node and other hidden nodes except for itself in the subsequent time interval is ignored.

**EP 3 059 699 B1**

**Patentansprüche**

1. Verfahren zum Trainieren eines neuronalen Netzes unter Verwendung von Lerndaten, wobei das Verfahren umfasst:

   Auswählen eines verborgenen Referenzknotens aus verborgenen Knoten in dem neuronalen Netz; und
   Trainieren des neuronalen Netzes auf der Grundlage der verbleibenden verborgenen Knoten, die man durch den Ausschluss des verborgenen Referenzknotens aus den verborgenen Knoten erhält,
   wobei der verborgene Referenzknoten einen Wert in einem vorhergehenden Zeitintervall bis zu einem nachfolgenden Zeitintervall beibehält;
   die Lerndaten sequentielle Daten umfassen, die wenigstens eines von Sprachdaten, Bilddaten, biometrischen Daten und Handschriftdaten umfassen; und
   eine Verbindung zwischen dem verborgenen Referenzknoten und sich selbst in einem nachfolgenden Zeitintervall aufrechterhalten wird, wobei eine Verbindung zwischen dem verborgenen Referenzknoten und anderen verborgenen Knoten außer sich selbst in dem nachfolgenden Zeitintervall ignoriert wird.

2. Verfahren nach Anspruch 1, bei dem das Auswählen das zufällige Auswählen des verborgenen Referenzknotens aus den verborgenen Knoten für jedes Zeitintervall umfasst.

3. Verfahren nach Anspruch 1 oder 2, bei dem der verborgene Referenzknoten einen Langzeitspeicherwert, der in einem entsprechenden verborgenen Referenzknoten im vorhergehenden Zeitintervall enthalten ist, bis zum nachfolgenden Zeitintervall beibehält.

4. Verfahren nach einem der Ansprüche 1 bis 3, bei dem der verborgene Referenzknoten eine Werteingabe von einer unteren Schicht einer verborgenen Schicht, die einen entsprechenden verborgenen Referenzknoten umfasst, blockiert.

5. Verfahren nach einem der Ansprüche 1 bis 4, bei dem der verborgene Referenzknoten eine Wertausgabe an eine obere Schicht einer verborgenen Schicht, die einen entsprechenden verborgenen Referenzknoten umfasst, blockiert.

6. Verfahren nach einem der Ansprüche 1 bis 5, bei dem die verbleibenden verborgenen Knoten mit verborgenen Knoten anderer Zeitintervalle verbunden werden, die das vorhergehende und das nachfolgende Zeitintervall umfassen.

7. Verfahren nach einem der Ansprüche 1 bis 6, bei dem das Trainieren das Aktualisieren einer in dem neuronalen Netz enthaltenen Verbindungsgewichtung auf der Grundlage eines Ergebnisses des Trainierens umfasst.

8. Verfahren nach einem der Ansprüche 1 bis 7, bei dem das neuronale Netz ein rekurrierendes neuronales Netz mit verborgenen Schichten ist.

9. Erkennungsvorrichtung (500), umfassend:

   einen Empfänger (510), der dazu eingerichtet ist, sequentielle Daten zu empfangen; und
   einen Erkenner (520), der dazu eingerichtet ist, die sequentiellen Daten unter Verwendung eines neuronalen Netzes mit verborgenen Knoten zu erkennen,
   wobei wenigstens einer der verborgenen Knoten einen Wert umfasst, der auf der Grundlage eines ersten Wertes eines entsprechenden verborgenen Knotens in einem ersten Zeitintervall, das einem aktuellen Zeitintervall vorausgeht, einer ersten Wahrscheinlichkeit, dass der erste Wert des entsprechenden verborgenen Knotens bis zum aktuellen Zeitintervall zu übertragen ist, eines zweiten Wertes eines entsprechenden verborgenen Knotens in einem zweiten Zeitintervall, das dem ersten Zeitintervall vorausgeht, und einer zweiten Wahrscheinlichkeit, dass der zweite Wert des entsprechenden verborgenen Knotens bis zum aktuellen Zeitintervall zu übertragen ist, berechnet wird,
   wobei das neuronale Netz auf der Grundlage der verbleibenden verborgenen Knoten trainiert wird, die man durch Ausschließen eines verborgenen Referenzknotens aus den verborgenen Knoten erhält;
   wobei die sequentiellen Daten wenigstens eines von Sprachdaten, Bilddaten, biometrischen Daten und Handschriftdaten umfassen.

10. Nicht flüchtiges computerlesbares Speichermedium, umfassend ein Programm, das Anweisungen umfasst, um einen Computer zu veranlassen, das Verfahren zum Trainieren eines neuronalen Netzwerks unter Verwendung von Lerndaten durchzuführen, wobei das Verfahren umfasst:

Trainieren des neuronalen Netzes in einem ersten Zeitintervall auf der Grundlage der verbleibenden verborgenen Knoten, die man durch Ausschließen eines verborgenen Referenzknotens aus den verborgenen Knoten erhält, wobei der verborgene Referenzknoten aus verborgenen Knoten in dem neuronalen Netz ausgewählt wird; und

Trainieren des neuronalen Netzes in einem nachfolgenden Zeitintervall, wobei der verborgene Referenzknoten einen Wert in einem vorhergehenden Zeitintervall bis zu einem nachfolgenden Zeitintervall beibehält;

wobei die Lerndaten sequentielle Daten umfassen, die wenigstens eines von Sprachdaten, Bilddaten, biometrischen Daten und Handschriftdaten umfassen; und

eine Verbindung zwischen dem verborgenen Referenzknoten und sich selbst in einem nachfolgenden Zeitintervall aufrechterhalten wird, wobei eine Verbindung zwischen dem verborgenen Referenzknoten und anderen verborgenen Knoten außer sich selbst in dem nachfolgenden Zeitintervall ignoriert wird.

## Revendications

1. Procédé de formation de réseau neuronal utilisant des données de formation, le procédé comprenant:

la sélection d'un nœud caché de référence parmi des noeuds cachés dans le réseau neuronal; et
la formation du réseau neuronal sur la base des noeuds cachés restants obtenus en excluant le nœud caché de référence des nœuds cachés,
dans lequel le nœud caché de référence maintient une valeur dans un intervalle de temps précédent jusqu'à un intervalle de temps suivant;
dans lequel les données de formation comprennent des données séquentielles comprenant au moins l'un des éléments que sont les données vocales, les données d'image, les données biométriques et les données d'écriture;
dans lequel une connexion entre le nœud caché de référence et lui-même dans un intervalle de temps ultérieur est maintenue, dans lequel une connexion entre le nœud caché de référence et d'autres nœuds cachés à l'exception de lui-même dans l'intervalle de temps ultérieur est ignorée.

2. Procédé de la revendication 1, dans lequel la sélection comprend la sélection aléatoire du nœud caché de référence parmi les nœuds cachés pour chaque intervalle de temps.

3. Procédé selon les revendications 1 ou 2, dans laquelle le nœud caché de référence maintient une valeur de mémoire à long terme incluse dans un nœud caché de référence correspondant dans l'intervalle de temps précédent jusqu'à l'intervalle de temps suivant.

4. Procédé selon l'une des revendications 1 à 3, dans lequel le nœud caché de référence bloque une entrée de valeur provenant d'une couche inférieure d'une couche cachée comprenant un nœud caché de référence correspondant.

5. Procédé selon l'une des revendications 1 à 4, dans lequel le nœud caché de référence bloque une sortie de valeur vers une couche supérieure d'une couche cachée comprenant un nœud caché de référence correspondant.

6. Procédé selon l'une des revendications 1 à 5, dans lequel les nœuds cachés restants sont connectés à des nœuds cachés d'autres intervalles de temps comprenant l'intervalle de temps précédent et l'intervalle de temps suivant.

7. Procédé selon l'une des revendications 1 à 6, dans lequel la formation comprend la mise à jour d'un poids de connexion inclus dans le réseau neuronal sur la base d'un résultat de la formation.

8. Procédé selon l'une des revendications 1 à 7, dans lequel le réseau neuronal est un réseau neuronal récurrent comprenant des couches cachées.

9. Appareil de reconnaissance (500) comprenant:

un récepteur (510) configuré pour recevoir des données séquentielles; et
un dispositif de reconnaissance (520) configuré pour reconnaître les données séquentielles en utilisant un réseau neuronal comprenant des noeuds cachés,

dans lequel au moins un des nœuds cachés comprend une valeur calculée sur la base d'une première valeur d'un nœud caché correspondant dans un premier intervalle de temps précédant un intervalle de temps courant, une première probabilité que la première valeur du nœud caché correspondant soit transférée jusqu'à l'intervalle de temps courant, une seconde valeur d'un nœud caché correspondant dans un second intervalle de temps précédant le premier intervalle de temps, et une seconde probabilité que la seconde valeur du nœud caché correspondant soit transférée jusqu'à l'intervalle de temps courant,

dans lequel le réseau neuronal est formé sur la base des nœuds cachés restants obtenus en excluant un nœud caché de référence des nœuds cachés;

dans lequel les données séquentielles comprennent au moins l'un des éléments que sont les données vocales, les données d'image, les données biométriques et les données d'écriture manuscrite.

**10.** Support d'enregistrement lisible par ordinateur non transitoire comprenant un programme comprenant des instructions pour conduire un ordinateur à exécuter le procédé de formation d'un réseau neuronal en utilisant des données de formation, le procédé comprenant:

la formation du réseau neuronal dans un premier intervalle de temps sur la base des nœuds cachés restants obtenus en excluant un nœud caché de référence des nœuds cachés, dans lequel le nœud caché de référence est sélectionné parmi les nœuds cachés dans le réseau neuronal; et

la formation du réseau neuronal dans un intervalle de temps ultérieur, dans lequel le nœud caché de référence maintient une valeur dans un intervalle de temps précédent jusqu'à un intervalle de temps ultérieur;

dans lequel les données de formation comprennent des données séquentielles comprenant au moins l'un des éléments que sont les données vocales, les données d'image, les données biométriques et les données d'écriture manuscrite;

dans lequel une connexion entre le nœud caché de référence et lui-même dans un intervalle de temps ultérieur est maintenue, dans lequel une connexion entre le nœud caché de référence et d'autres nœuds cachés, à l'exception de lui-même dans l'intervalle de temps ultérieur, est ignorée.

**FIG. 1**

**FIG. 2**

240        250        260

230

220

242

246    252    256    262    266

210

# FIG. 3

## FIG. 4

NET OUTPUT

$b_c^t$

NET INPUT

$x_i^t$

## FIG. 5

RECOGNITION APPARATUS 500

SEQUENTIAL DATA →

RECEIVER 510

→ RECOGNIZER 520

## FIG. 6

610    620    630

p*(1-p)

(1-p)

640

...

616    626    636

## FIG. 7

START

710

SELECT AT LEAST ONE REFERENCE HIDDEN NODE

720

TRAIN NEURAL NETWORK BASED ON REMAINING
HIDDEN NODES OBTAINED BY EXCLUDING
AT LEAST ONE REFERENCE HIDDEN NODE

END

## FIG. 8

```
        ┌─────────────┐
        │    START    │
        └──────┬──────┘
               │
               ▼                                    ⌐810
┌────────────────────────────────────────────────┐
│          RECEIVE SEQUENTIAL DATA                │
└────────────────────────┬───────────────────────┘
                         │
                         ▼                          ⌐820
┌────────────────────────────────────────────────┐
│          RECOGNIZE SEQUENTIAL DATA              │
└────────────────────────┬───────────────────────┘
                         │
                         ▼
                  ┌─────────────┐
                  │     END     │
                  └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAN KOUTNÍK et al.** A Clockwork RNN. *PROCEEDINGS OF THE 31ST INTERNATIONAL CONFERENCE ON MACHINE LEARNING,* 14 February 2014, vol. 32

- Dropout Improves Recurrent Neural Networks for Handwriting Recognition. **PHAM VU et al.** 2014 14TH INTERNATIONAL CONFERENCE ON FRONTIERS IN HANDWRITING RECOGNITION. IEEE, 01 September 2014